Europäisches Patentamt

European Patent Office

Office européen des brevets

(19)

(11) Numéro de publication : **0 039 627**
**B1**

(12) **FASCICULE DE BREVET EUROPÉEN**

(45) Date de publication du fascicule du brevet :
16.04.86

(51) Int. Cl.⁴ : **B 66 C 1/44**, B 65 G 57/28

(21) Numéro de dépôt : **81400143.4**

(22) Date de dépôt : **30.01.81**

(54) Procédé et dispositif de relevage et de constitution de paquets de tuiles ou produits analogues.

(30) Priorité : **11.04.80 FR 8008157**

(43) Date de publication de la demande :
**11.11.81 Bulletin 81/45**

(45) Mention de la délivrance du brevet :
**16.04.86 Bulletin 86/16**

(84) Etats contractants désignés :
**AT BE CH DE GB IT LI LU NL SE**

(56) Documents cités :
DE-B- 1 301 012
DE-B- 2 002 453
FR-A- 2 266 581
FR-A- 2 360 490
FR-A- 2 360 491
US-A- 1 709 138
US-A- 3 860 132
US-A- 3 987 905

(73) Titulaire : **Société d'Etudes et de Constructions Electriques et Mécaniques SECEM**
**4, rue Richepanse**
**F-75001 Paris (FR)**

(72) Inventeur : **Pate, André**
**2, Ave. Eugène Spuller**
**F-21340 Nolay (FR)**

(74) Mandataire : **Loyer, Yves et al**
**CABINET PIERRE LOYER 18, rue de Mogador**
**F-75009 Paris (FR)**

Jouve, 18, rue St-Denis, 75001 Paris, France

## Description

Dans les tuileries modernes, la manutention est de plus en plus mécanisée. L'un des postes de manutention se situe entre les presses ou les séchoirs, qui délivrent les tuiles crues et les fours de cuisson. Dans les usines modernes, la cuisson se fait en paquets de tuiles cerclées ou en paquets de tuiles disposées de chant dans des paniers en forme de U.

Les tuiles arrivent des séchoirs ou des presses posées à plat sur des bandes transporteuses, il faut donc les relever et les placer côte à côte par groupes ou paquets qui sont repris par des pinces pour être envoyés au cerclage ou disposés dans les U de cuisson et de là, vers les fours.

On connaît (DE-B-1 301 012) des procédés et des machines de relevage et de constitution de paquets de tuiles. Dans ce procédé les tuiles sont relevées une par une et placées de chant côte à côte pour former un paquet qui est ensuite repris globalement par une pince.

Ce dispositif ne s'accomode pas de l'absence de tuiles dans le circuit d'alimentation ; par ailleurs il est inapplicable au cas des tuiles engobées ou émaillées, en raison des rayures superficielles qu'ils entraînent. D'autre part, s'agissant de tuiles à l'état cru, donc fragiles, l'empilage ainsi effectué est une cause de rupture. Il faut alors effectuer un triage après cuisson, ce qui est une opération très coûteuse en main d'œuvre.

On connaît aussi des dispositifs utilisant des batteries de pinces individuelles (FR-A-2 266 581) chaque tuile étant saisie par une pince individuelle et transférée en un poste approprié. Du fait de l'écartement fixe des pinces, un tel dispositif ne peut opérer que sur produits séparés et ne permet pas la constitution de paquets.

L'invention a pour objet un procédé et une machine permettant de surmonter les inconvénients de l'art antérieur.

Le procédé selon l'invention consiste à relever les tuiles une à une, de façon à les placer de chant, séparées, équidistantes, et alignées selon un plan, puis à les reprendre par une batterie de pinces individuelles, d'écartement variable, également équidistantes, pour ensuite relever la batterie de pinces, la redresser à l'horizontale et resserer les pinces de façon à former un paquet de tuiles côte à côte, l'ensemble étant alors transporté en tout poste approprié sur chemins de roulement.

La machine selon l'invention se compose d'un dispositif de relevage associé à une batterie de pinces, le dispositif de relevage étant formé d'une chaine ou bande sans fin portant des bras de relevage sensiblement perpendiculaires à la chaîne, séparés et équidistants qui après relevage déplacent les tuiles en les maintenant séparées et équidistantes, tandis que les pinces de transport sont constituées par une série de pinces individuelles disposées parallèlement en une batterie dans laquelle les pinces sont parallèles, à écartement variable, entre une position où elles sont équidistantes avec le même écartement que les bras de relevage et une position où elles sont rapprochées, la batterie de pinces étant montée sur un support déplaçable.

L'ensemble support-batterie de pinces est monté sur des moyens permettant son convoyage depuis le dispositif de relevage jusqu'à tout poste approprié de l'installation. Ces dispositions ainsi que d'autres sont illustrées par le dessin annexé, sur lequel on a représenté :

Figure 1 une vue schématique latérale de la machine, la batterie de pinces étant parallèle au dispositif de relevage et les pinces étant écartées ;

Figure 2 une vue schématique en coupe selon X-X de la figure 1, montrant le détail d'une pince ;

Figure 3 une vue analogue à la figure 1, la batterie de pinces étant en position relevée, horizontale, pinces rapprochées ;

Figure 4 une vue analogue à la figure 1, la batterie de pinces en position basse, horizontale, pinces rapprochées ;

Figure 5 une coupe schématique selon Y-Y de la figure 1, illustrant un détail d'une variante de réalisation du dispositif de relevage.

En se reportant à ces figures, on voit que le procédé selon l'invention consiste à relever les tuiles une par une, de façon à les placer de chant, séparées, équidistantes et alignées sur un plan incliné ascendant 1, puis à les reprendre par une batterie 2 de pinces individuelles 3, lesdites pinces étant susceptibles de se déplacer les unes par rapport aux autres entre une position où elles sont séparées, alignées parallèlement au plan incliné 1 et équidistantes avec le même intervalle que les tuiles relevées, et une position où elles sont rapprochées et alignées selon un plan horizontal, des moyens étant prévus pour effectuer le levage et le transport de ladite batterie entre une position de coopération avec le plan incliné 1 et une position de dépôt des tuiles en tout poste approprié pour une opération ultérieure.

Cette opération ultérieure pourra être, selon les cas, une opération de cerclage par paquets ou une opération de dépôt des tuiles dans les U de cuisson, ou toute autre opération. Ainsi, dans le procédé selon l'invention, les tuiles sont relevées à l'état séparé, prises par les pinces individuellement, soulevées, transportées et rapprochées sans risque de frottement et de détérioration.

La machine selon l'invention comprend un dispositif de relevage A, associé à un ensemble porte-pinces B.

Le dispositif de relevage A est formé d'une chaîne ou bande sans fin 4, tendue entre deux rouleaux de renvoi 5 et 6, de façon à constituer un plan incliné ascendant 1, ladite chaîne portant des bras de relevage 7 perpendiculaires à la chaîne 4 et équidistants.

L'ensemble porte-pinces B est formé d'une série de pinces étroites 3, à raison d'une pince par tuile (pinces individuelles) disposées parallèlement en une batterie 2, dans laquelle les pinces sont mobiles les unes par rapport aux autres entre une position écartée où elles sont équidistantes avec le même écartement que les bras 7 et une position où elles sont rapprochées, voire jointives, la batterie 2 étant montée sur un support 8, par l'intermédiaire de bras télescopiques, chaînes ou l'équivalent de façon à pouvoir prendre, à volonté, une position parallèle à la chaîne 4 et au plan 1 et une position horizontale, le support 8 étant lui-même muni de moyens capables de coopérer avec un chemin de roulement pour le transfert de la pince en tout poste approprié, tel qu'un poste de cerclage ou de dépôt des tuiles dans des U de cuisson.

Dans la forme de réalisation préférée de l'invention qui fait l'objet du dessin annexé, les bras de relevage 7 ont la forme de L, de sorte que les tuiles reposent sur la branche horizontale du L et s'appuient par gravité sur la branche verticale du L, ce qui leur assure une position bien définie avec un parallélisme rigoureux des tuiles entre elles.

Pendant la phase de relevage, le mouvement de la chaîne 4 est de préférence un mouvement pas à pas, commandé par le détecteur 12, actionné par les tuiles 9 arrivant posées à plat sur la bande transporteuse 10, relayée par la bande 11 jusque sur les bras 7 dans la zone du rouleau 5, où ils sont horizontaux. On est ainsi assuré qu'il ne peut y avoir d'emplacement restant vide dans le dispositif A, puisque la chaîne 4 n'avance pas s'il n'y a pas de tuiles placées sur un bras 7.

Dans l'exemple représenté, la bande 10 est formée d'une bande principale, complétée par un tronçon de bande terminale 11 introduisant et amenant les tuiles au-dessus des bras 7, dans la zone où ils sont horizontaux, ladite bande 11 étant actionnée à une vitesse supérieure à la bande 10, ce qui permet d'avoir un espace certain entre deux tuiles consécutives et un mouvement continu sur la bande 10. La présence d'une tuile sur le détecteur 12 provoque l'avancement d'un pas des bras 7.

Les différentes pinces individuelles 3 de la batterie 2 sont formées de deux branches 3a, 3b articulées en 13a, 13b sur un chariot 14, monté coulissant sur la poutre principale 15 de la batterie 2, par exemple par le moyen des galets 16 qui reposent sur des fers plats 27. Les branches 3a, 3b portent, à leurs extrémités inférieures 17, des plots 18 pour la prise des tuiles ; les plots 18 sont de préférence en matière plastique ou élastique.

La manœuvre simultanée des pinces est assurée par les barres 19, qui s'étendent chacune sur au moins une partie des extrémités supérieures 20 des branches des pinces 3. Les barres 19 sont actionnées par le ou les vérins 21, par l'intermédiaire de la ou des genouillères 22. Dans l'exemple représenté, les barres 19 agissent à l'ouverture à l'encontre des ressorts tarés 23 qui tendent à la fermeture des pinces. Cette disposition peut être inversée ; on peut également prévoir des barres d'ouverture et des barres de fermeture, l'important étant que les pinces restent libres de coulisser le long des barres.

Une disposition de l'invention consiste en ce que les pinces 3 sont reliées entre elles en au moins un groupe par des liens souples 24 (de préférence des sangles plates) sur lesquels elles sont fixées en position relative prédéterminée et réglable par les étriers 25, leur mouvement relatif de rapprochement et d'écartement étant commandé par des moyens tels que les vérins 26, provoquant le déplacement d'au moins l'une des pinces terminales d'un groupe, l'autre pince terminale pouvant être fixe.

Lorsque les vérins 26 agissent à l'écartement, ce mouvement se communique d'une pince à la suivante par la sangle 24, jusqu'à ce que celle-ci soit tendue d'un bout à l'autre ; les pinces 3 sont alors à l'écartement des bras 7 ; lorsque les vérins 26 agissent au rapprochement, ce mouvement se communique d'une pince à la suivante par proximité, au fur et à mesure que les pinces ou les tuiles se touchent, jusqu'à ce que les tuiles soient toutes rapprochées. Les pinces 3 étant suspendues de façon relativement flottante sur la poutre 15, elles prennent la position de rapprochement requise par les tuiles et s'adaptent en particulier aux éventuelles déformations de celles-ci, sans risque de détérioration.

La batterie 2 est montée sur un support 8, de façon à pouvoir se déplacer entre une position parallèle au plan incliné 1 et une position horizontale. A cet effet, dans l'exemple représenté, la batterie 2 est suspendue au support 8 à l'une de ses extrémités au moins par une liaison permettant de modifier la distance entre cette extrémité et le support 8, telle que par vis sans fin, bras télescopiques, chaînes ou équivalents.

D'autre part, la batterie 2 est également montée sur le support 8 par des moyens permettant de déplacer ladite batterie parallèlement à l'axe de symétrie des pinces.

Dans l'exemple représenté, la batterie 2 est montée coulissante dans un cadre en U 28, par des manchons 29 coulissant sur des barres 30, sous l'effet de la gravité agissant à l'encontre de chaînes de relevage 32, et le cadre 28 est monté sur le support 8, d'un côté par l'intermédiaire d'une articulation 37, l'autre côté étant relevable par rapport au support 8 par tout moyen, tel qu'une chaîne 31.

Ainsi, en commandant le moteur 33 agissant sur les chaînes 32, on relève ou abaisse la batterie 2 parallèlement à elle-même, qu'elle soit inclinée ou horizontale, et en commandant le moteur 34 agissant sur la chaîne 31, on incline la batterie 2, jusqu'à la rendre parallèle au plan 1 ou on la met à l'horizontale.

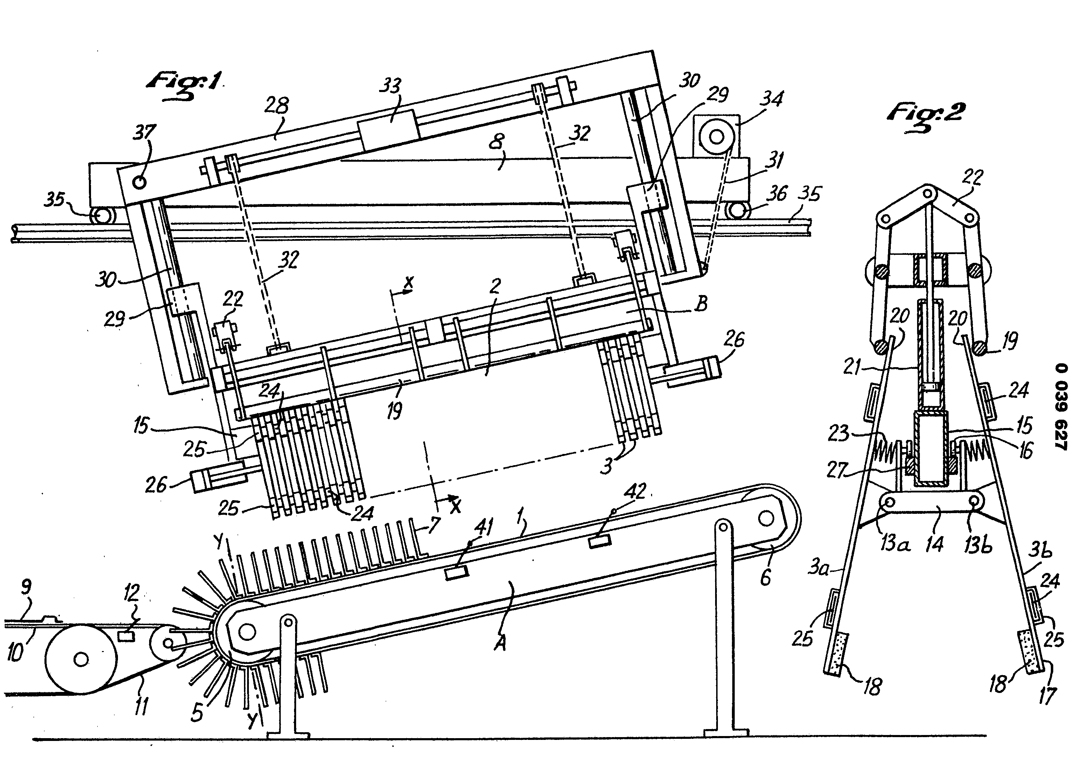

La figure 1 représente la batterie 2 en position parallèle au plan 1, légèrement relevée pour permettre l'arrivée des tuiles par le mouvement de la chaîne 4.

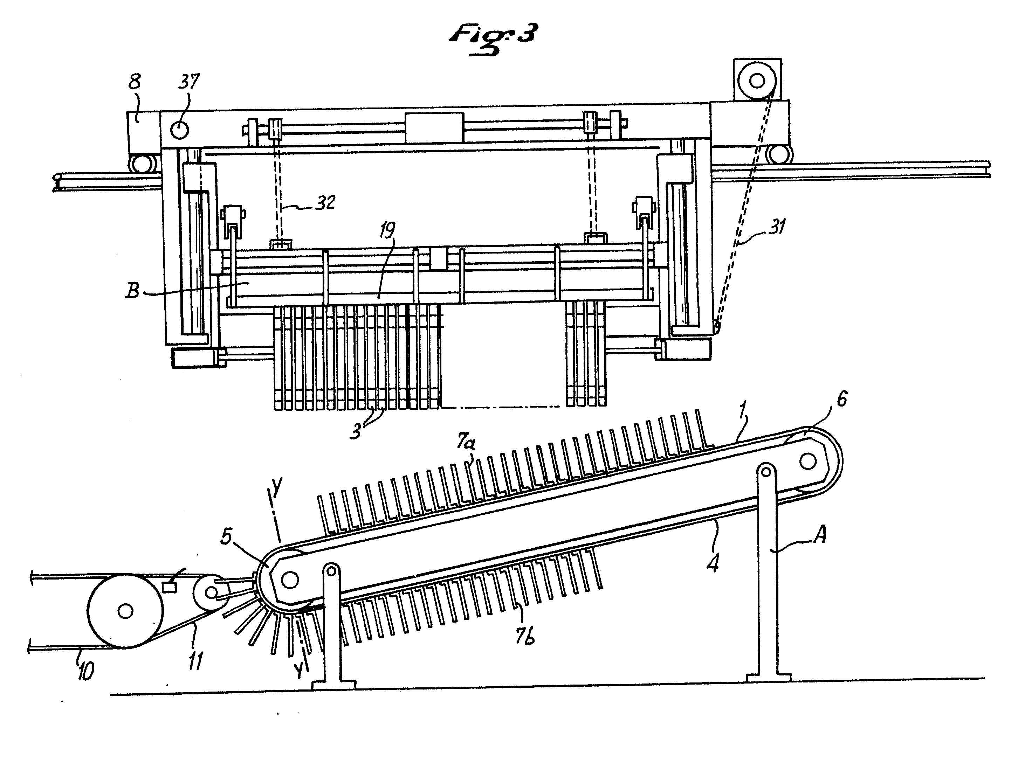

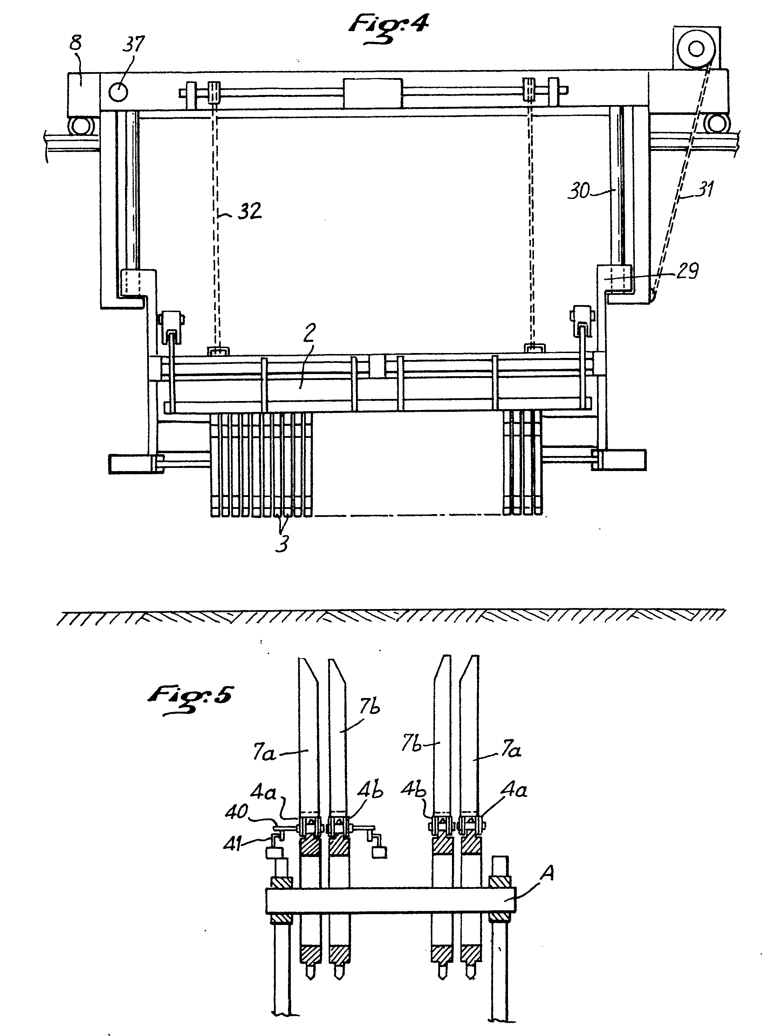

La figure 3 représente la batterie 2, après relevage perpendiculaire au plan 1 et redressement à l'horizontale.

La figure 4 représente la batterie 2 en position horizontale basse, par exemple pour le dépôt des tuiles dans les U de cuisson, ou à un poste de cerclage.

Le support 8 permet également le déplacement de l'ensemble porte-pinces B sur la voie de transport 35, par exemple par les roues 36.

Dans l'exemple représenté, on a figuré deux vérins d'extrémité 26, qui tendent à rapprocher la totalité des pinces en un paquet unique par action sur les pinces terminales. On peut également prévoir une pince terminale fixe et un seul vérin 26 agissant sur la pince terminale opposée. L'invention prévoit également le regroupement partiel en paquets séparés des pinces 3 par des sangles 24, couvrant un groupe de pinces associées à des vérins 26 agissant sur une pince terminale d'un tel groupe, l'autre pince terminale étant fixe.

Selon une variante de réalisation de l'invention représentée figure 5 et figure 3, le dispositif de relevage A comporte plusieurs groupes de bras 7a, 7b montés sur plusieurs chaînes 4a, 4b, commandées indépendamment, chaque groupe ayant autant de bras 7 que l'ensemble porte-pinces B comporte de pinces 3.

On améliore ainsi la cadence de manutention, le groupe 7b pouvant se mettre en place et commencer à relever des tuiles pendant que l'ensemble porte-pinces relève les tuiles du premier groupe 7a et les transfère au poste suivant.

A cet effet, le dispositif de relevage A comporte tous moyens de commande permettant le déplacement continu d'un groupe 7a ou 7b, une fois la phase de relevage terminée, et ledit groupe rempli de tuiles, ou encore pour amener un tel groupe en position de fonctionnement pas à pas. De tels moyens pourront être des doigts 40, portés par les chaînes 4a, 4b et coopérant avec des galets, tels que 41, 42 (figure 1), actionnant des contacts électriques, les galets 41, 42 étant placés sur le trajet des doigts 40. Par exemple, lorsqu'un groupe 7a est rempli de tuiles, le doigt 40 correspondant actionne le galet 41, qui provoque son avance jusqu'à actionnement du galet 42 qui l'immobilise en face de l'ensemble porte-pinces. Le même galet 42 peut alors actionner, d'une part, le groupe 7b qui vient se mettre en position de mouvement pas à pas, devant la bande 11 et, d'autre part, les mouvements de l'ensemble porte-pinces B.

De tels systèmes de programmation sont connus en soi et n'ont pas à être décrits plus en détail. Par exemple, le galet 41 peut être déplaçable le long du plan 1 et sa position peut constituer un moyen de comptage des tuiles dans le cas où l'on désire former des paquets de tuiles d'un nombre inférieur à celui des bras 7 d'un groupe.

De même, les galets peuvent provoquer l'arrêt de l'arrivée des tuiles par la bande 10 en cas de panne de la machine.

Les principaux avantages de l'invention sont les suivants :

a) Les tuiles sont redressées et accumulées en paquets tout en restant séparées les unes des autres jusqu'à la fin de l'opération, de sorte qu'elles ne sont pas détériorées par contacts et frottements ;

b) L'arrivée des tuiles peut être irrégulière sans que, pour autant, il n'y ait formation de paquet incomplet, du fait du fonctionnement pas à pas du dispositif de relevage sous la commande des tuiles au fur et à mesure de leur arrivée ;

c) Les paquets peuvent être d'un nombre quelconque ; un simple dispositif de comptage permet en effet d'interrompre le remplissage d'un groupe de bras 7 et de provoquer sa mise en position sous la batterie de pinces 2 ;

d) Les tuiles relevées restent appuyées par gravité sur les bras 7 du fait du plan incliné ascendant 1, ce qui évite les détériorations par basculement ;

e) Il est possible d'intervenir à tout moment au niveau de chaque dispositif de relevage A dont la commande pas à pas est indépendante de celle du dispositif voisin.

Cette particularité permet notamment d'opérer un tri sur tuiles crues. Par une surveillance à l'arrivée des tuiles sur la bande 10, on peut éliminer les tuiles mauvaises, en effet, le fonctionnement pas à pas du dispositif A évite tout espace non occupé dans le paquet en formation, ce qui est une condition d'un tel tri (on peut également opérer par remplacement de tuiles mauvaises par des tuiles bonnes sur le dispositif A).

Or, un bon triage avant cuisson permet d'obtenir après cuisson des paquets ayant environ 99 % de tuiles bonnes, ce qui évite le triage après cuisson, lequel est très coûteux en main d'œuvre, puisqu'il exige l'examen et la manipulation de toutes les tuiles, alors que le triage avant cuisson se limite à l'élimination de quelques tuiles mauvaises ;

f) La machine s'adapte très simplement aux différents modèles de tuiles par simple réglage de l'espacement des bras 7 et des pinces 3 en position écartée ;

g) La machine est utilisable aussi bien pour la cuisson en paquets cerclés que pour la cuisson en U de céramique.

Le procédé et la machine selon l'invention ont été conçus pour le relevage et la constitution de paquets de tuiles. Il va de soi qu'elle peut être adaptée au relevage et à la constitution de paquets de tous produits analogues, c'est-à-dire de produits plats et fragiles.

**Revendications**

1. Procédé de relevage et de constitution de paquets de tuiles ou produits analogues dans lequel les tuiles, alimentées à plat par bande, sont relevées une par une puis reprises en groupe par des pinces pour former des paquets de tuiles placées de chant côte à côte, caractérisé en ce que les tuiles sont tout d'abord relevées une par une pour être disposées et maintenues de chant, séparées, équidistantes, alignées selon un plan et déplacées ensemble selon ce plan en une seule opération, et en ce que les tuiles sont ensuite reprises individuellement par une batterie de pinces à écartement variable, puis rapprochées et alignées selon un plan horizontal, le paquet ainsi constitué étant alors transporté en tout poste approprié pour une opération ultérieure.

2. Machine de relevage et de constitution de paquets de tuiles ou produits analogues du type dans lequel les tuiles (9) sont relevées par la rotation de bras de relevage (7) dans la région d'extrémité d'un transporteur sans fin tendu entre deux rouleaux de renvoi (5, 6) pour être reprises ensuite en une autre région dudit transporteur par des pinces de transport, caractérisée en ce que le transporteur sans fin est une chaîne ou bande sans fin (4) portant des bras de relevage (7) sensiblement perpendiculaires à la chaîne, séparés et équidistants qui après relevage déplaçant les tuiles (9) en les maintenant séparées et équidistantes, tandis que les pinces de transport sont constituées par une série de pinces individuelles (3) disposées parallèlement en une batterie (2) dans laquelle les pinces sont parallèles, à écartement variable, entre une position où elles sont équidistantes avec le même écartement que les bras (7) et une position où elles sont rapprochées, la batterie (2) étant montée sur un support (8) déplaçable.

3. Machine selon la revendication 2, caractérisée en ce que le rouleau de renvoi (5) est situé à l'extrémité inférieure d'un plan incliné (1), de préférence ascendant, formé par la chaîne ou bande sans fin (4) entre les rouleaux (5 et 6) de telle sorte que les tuiles (9) reposent par simple gravité sur les bras de relevage (7).

4. Machine selon l'une quelconque des revendications 2 et 3, caractérisée en ce que les bras de relevage (7) ont la forme de L, de sorte que les tuiles (9) reposent sur la branche horizontale du L et s'appuient par gravité sur la branche verticale du L.

5. Machine selon l'une quelconque des revendications 2 à 4, caractérisée en ce que le mouvement de la chaîne (4) est, pendant la phase de relevage, un mouvement pas à pas commandé par les tuiles (9) au fur et à mesure de leur arrivée sur les bras (7) dans la zone de parcours où ces derniers sont sensiblement horizontaux.

6. Machine selon la revendication 2, caractérisée en ce que l'arrivée des tuiles comprend un tronçon de bande porteuse (11) amenant les tuiles au-dessus des bras (7) dans la zone où ils sont horizontaux, ledit tronçons de bande étant actionné de façon continue et plus rapide que la bande transporteuse principale (10), dont il constitue la partie terminale.

7. Machine selon la revendication 2 caractérisée en ce que les différentes pinces individuelles (3) de la batterie (2) sont formées de deux branches (3a, 3b) articulées en (13a, 13b) sur un chariot (14) monté coulissant sur la poutre principale (15) de la batterie (2) et en ce que le chariot coulissant (14) est monté suspendu et flottant sur la poutre principale (15) de la batterie (2).

8. Machine selon la revendication 7 caractérisée en ce que la manœuvre simultanée des pinces (3) est assurée par les barres (19) qui s'étendent chacune sur au moins une partie des extrémités supérieures (20) des branches des pinces (3).

9. Machine selon l'une des revendications 7 ou 8 caractérisée en ce que les pinces sont reliées entre elles en au moins un groupe par des liens souples (24) (de préférence des sangles plates), sur lesquels elles sont fixées en position relative prédéterminée et réglable par des étriers (25).

10. Machine selon l'une quelconque des revendications 2 à 5, caractérisée en ce que le dispositif de relevage comporte plusieurs groupes de bras (7a, 7b) montés sur plusieurs chaînes (4a, 4b) montées sur des rouleaux de renvois coaxiaux (5, 6) mais commandées indépendamment, chaque groupe ayant autant de bras (7) que la batterie de pinces (2) comporte de pinces (3).

11. Machine selon l'une quelconque des revendications 7 à 9 caractérisée en ce que la batterie de pinces (2) est suspendue au support (8) à l'une de ses extrémités au moins par une liaison permettant de modifier la distance entre cette extrémité et le support (8).

**Claims**

1. Method for tipping up and bundling tiles or similar products in which tiles are fed laying flat on a conveyor belt, before being tipped up one by one and then picked up in a group by tongs for forming bundles of tiles laying on edge side-by-side, characterized in that the tiles are at first tipped up one by one so as to be placed and maintained standing on edge while being separated, evenly spaced, aligned along a plane and displaced together along this plane in a single operation, and that the tiles are subsequently picked up individually by a battery of tongs with a variable spacing and then brought closer together and aligned along an horizontal plane, the bundle thus formed being thereafter carried to any suitable station for a further operation.

2. Machine for tipping up and bundling tiles or similar products, of the type in which the tiles (9) are tipped up by the rotation of raiser arms (7) in the terminal region of a closed-loop conveyor stretched between two return rolls (5, 6) for being subsequently picked up in another region of said conveyor by carrier tongs, characterized in that the closed-loop conveyor is a chain or belt (4) carrying raiser arms (7) substantially perpendicular thereto, separated and evenly spaced which, after tipping up the tiles (9) move them along while maintaining them separated and evenly spaced, while the carrier tongs consist of a series of individual tongs (3) arranged in parallel in a battery (2) in which the tongs are parallel with a variable spacing, and movable between a position where they are equidistant with the same spacing as the arms (7) and a position where they are brought closer together, the battery (2) being mounted on a movable support (8).

3. Machine according to claim 2, characterized in that the return roll (5) is located at the lower end of an inclined plane (1) which is preferably ascending, formed by the closed-loop chain or belt (4) between rolls (5 and 6) so that the tiles (9) rest upon the raiser arms (7) through the mere effect of gravity.

4. Machine according to either of claims 2 and 3, characterized in that the raiser arms (7) are L-shaped, so that the tiles (9) rest upon the horizontal leg of the L and lean through gravity against the vertical leg of the L.

5. Machine according to any of claims 2 to 4, characterized in that the motion of the chain (4) during the tipping-up phase is a stepwise motion activated by the tiles (9) as they arrive one-by-one on the arms (7) in the region of their course where these arms are practically horizontal.

6. Machine according to claim 2, characterized in that the feed-in system comprises a conveyor belt section (11) bringing the tiles upon the arms (7) in the region where these arms are horizontal, said conveyor belt section being driven continuously at a faster rate than the main conveyor belt (10), of which it forms the terminal part.

7. Machine according to claim 2, characterized in that the various individual tongs (3) of the battery (2) are each formed of two limbs (3a, 3b) articulated in (13a, 13b) on a carriage (14) slidably mounted on the main beam (15) of the battery (2) and that the sliding carriage (14) is flexibly suspended from the main beam (15) of the battery (2).

8. Machine according to claim 7, characterized in that the simultaneous operation of the tongs (3) is by means of bars (19) each one of which extends over at least a part of the upper ends (20) of the limbs of the tongs (3).

9. Machine according to one of claims 7 or 8, characterized in that the tongs are connected together into at least one group by flexible links (24) (preferably flat straps) on which said tongs are fixed by yokes (25) in predetermined and adjustable relative position.

10. Machine according to any of claims 2 to 5 characterized in that the tipping-up device comprises several groups of arms (7a, 7b) carried on several chains (4a, 4b) mounted on coaxial return rolls (5, 6) but independently driven, each group having as many arms (7) as the battery (2) of tongs comprises tongs (3).

11. Machine according to any of claims 7 to 9, characterized in that the battery (2) of tongs is suspended from the support (8) through one of its ends by at least one linkage allowing the distance between this end and the support (8) to be modified.

## Patentansprüche

1. Verfahren zum Aufrichten und zur Paketbildung von Ziegeln oder ähnlichen Produkten, wobei die Ziegel, die auf einem Band liegend angeliefert werden, einzeln aufgerichtet werden und dann in Gruppen von Zangen erfaßt werden, um Pakete von nebeneinander auf der Kante stehenden Ziegeln zu bilden, dadurch gekennzeichnet, daß die Ziegel zuerst einzeln aufgerichtet und auf der Kante stehend in gleichmäßigen Abständen gemäß einer Ebene fluchtend gehalten und in einem Schritt gemäß dieser Ebene gemeinsam verschoben werden, und daß die Ziegel dann individuelle von einer Batterie von variable Abstände besitzenden Zangen erfaßt und gemäß einer waagerechten Ebene fluchtend einander angenähert werden, worauf das so gebildete Paket an irgendeinen geeigneten Platz für einen weiteren Arbeitsschritt gebracht wird.

2. Maschine zum Aufrichten und zur Paketbildung von Ziegeln oder ähnlichen Produkten, von der Art, bei der die Ziegel (9) durch die Drehung von Aufrichtarmen (7) in der Endzone eines zwischen zwei Umlenkrollen (5, 6) ausgespannten Endlos-Förderbands aufgerichtet werden, um anschließend in einer anderen Zone dieses Förderbands von Transportzangen ergriffen zu werden, dadurch gekennzeichnet, daß das Endlosförderband als Endloskette oder Endlosband (4) ausgebildet ist, das im wesentlichen senkrecht zur Kette und in gleichmäßigen Abständen Aufrichtarme (7) trägt, die die Ziegel (9) nach dem Aufrichten voneinander durch gleichmäßige Abstände getrennt verschieben, während die Transportzangen aus einer Reihe individueller Zangen (3) bestehen, die parallel in Form einer Batterie (2) angeordnet sind, in der die Zangen parallel liegen und einen variablen Abstand besitzen, nämlich eine Lage, in der sie dieselben Abstände wie die Arme besitzen, und eine Lage, in der sie einander angenähert sind, wobei die Batterie (2) auf einem verschiebbaren Träger (8) montiert ist.

3. Maschine nach Anspruch 2, dadurch gekennzeichnet, daß die Umlenkrolle (5) am unteren Ende einer schrägen Ebene (1) angeordnet ist, die vorzugsweise ansteigt und von der zwischen den Rollen (5 und 6) liegenden Endloskette oder dem Endlosband (4) gebildet wird, derart, daß die Ziegel (9) einfach aufgrund ihrer Schwerkraft auf den Aufrichtarmen (7) liegen.

4. Maschine nach einem beliebigen der Ansprüche 2 und 3, dadurch gekennzeichnet, daß die Aufrichtarme (7) L-Form besitzen, derart, daß die Ziegel (9) auf dem waagerechten Zweig des L aufliegen und sich durch Schwerkraft auf dem senkrechten Zweig des L abstützen.

5. Maschine nach einem beliebigen der Ansprüche 2 bis 4, dadurch gekennzeichnet, daß die Bewegung der Kette (4) während der Aufrichtphase schrittweise unter Steuerung durch die Ziegel (9) gemäß ihrem Eintreffen auf dem Arm (7) in der Umlaufzone gesteuert werden, in der diese Arme im wesentlichen waagerecht liegen.

6. Maschine nach Anspruch 2, dadurch gekennzeichnet, daß die Ziegel auf einem Abschnitt eines Förderbands (11) oberhalb der Arme (7) in der Zone herangeführt werden, in der die Arme waagerecht liegen, wobei der Bandabschnitt kontinuierlich und schneller bewegt wird als das Haupttransportband (10), dessen Endabschnitt es bildet.

7. Maschine nach Anspruch 2, dadurch gekennzeichnet, daß die verschiedenen individuellen Zangen (3) der Batterie (2) je aus zwei Zangenhälften (3a, 3b) gebildet werden, die bei (13a, 13b) auf einem Wagen (14) gelenkig gelagert sind, welcher auf dem Hauptgerüst (15) der Batterie (2) gleitend gelagert ist, und daß der gleitende Wagen (14) auf dem Hauptgerüst (15) der Batterie (2) hängend und flottierend montiert ist.

8. Maschine nach Anspruch 7, dadurch gekennzeichnet, daß die gleichzeitige Betätigung der Zangen (3) durch die Stangen (19) bewirkt wird, die sich je über mindestens einen Teil der oberen Enden (20) der Zangenhälften (3) erstrecken.

9. Maschine nach einem der Ansprüche 7 oder 8, dadurch gekennzeichnet, daß die Zangen untereinander in mindestens einer Gruppe durch nachgiebige Verbindungen (24) gekoppelt sind (vorzugsweise durch flache Gurte), auf denen sie in einer vorbestimmten und durch Bügel (25) regelbaren vorbestimmten Lage befestigt sind.

10. Maschine nach einem beliebigen der Ansprüche 2 bis 5, dadurch gekennzeichnet, daß die Vorrichtung zum Aufrichten mehrere Gruppen von Armen (7a, 7b) aufweist, die auf mehreren Ketten (4a, 4b) montiert sind, wobei diese Ketten auf koaxialen aber getrennt gesteuerten Umlenkrollen (5, 6) montiert sind und jede Gruppe ebensoviele Arme (7) enthält, wie die Zangenbatterie (2) Zangen (3) besitzt.

11. Maschine nach einem beliebigen der Ansprüche 7 bis 9, dadurch gekennzeichnet, daß die Zangenbatterie (2) am Träger (8) mit mindestens einem ihrer Enden über eine Verbindung aufgehängt ist, die es erlaubt, den Abstand zwischen diesem Ende und dem Träger (8) zu verändern.

*Fig:1*

*Fig:2*

0 039 627

Fig.3

*Fig:4*

*Fig:5*